(19) Europäisches Patentamt
European Patent Office
Office européen des brevets

(11) **EP 0 763 073 B1**

(12) **EUROPEAN PATENT SPECIFICATION**

(45) Date of publication and mention
of the grant of the patent:
**19.01.2000 Bulletin 2000/03**

(51) Int. Cl.[7]: **C08L 63/00**, C08G 73/02,
D21H 21/20, D21H 17/52,
D21H 17/54, C08G 59/50

(21) Application number: **95914887.5**

(22) Date of filing: **28.03.1995**

(86) International application number:
**PCT/US95/03769**

(87) International publication number:
**WO 95/27008 (12.10.1995 Gazette 1995/43)**

(54) **WET STRENGTH RESIN COMPOSITION AND METHODS OF MAKING THE SAME**

NASSFESTE HARZZUSAMMENSETZUNG UND VERFAHREN FÜR IHRE HERSTELLUNG

COMPOSITION DE RESINE RESISTANTE A L'ETAT HUMIDE ET SES PROCEDES DE
PRODUCTION

(84) Designated Contracting States:
**AT BE DE DK ES FR GB IT NL SE**

(30) Priority: **31.03.1994 US 221296**

(43) Date of publication of application:
**19.03.1997 Bulletin 1997/12**

(73) Proprietor: **HENKEL CORPORATION**
**Gulph Mills, Pennsylvania 19406 (US)**

(72) Inventors:
• **CLUNGEON, Nancy S.**
**Tega Cay, SC 297 15 (US)**
• **DEVORE, David, I.**
**Langhorne, PA 19047 (US)**
• **FISCHER, Stephen, A.**
**Yardley, PA 19067 (US)**

• **GIORDAN, Judith, C.**
**Villanova, PA 19085 (US)**

(74) Representative:
**von Kreisler, Alek, Dipl.-Chem. et al**
**Patentanwälte,**
**von Kreisler-Selting-Werner,**
**Bahnhofsvorplatz 1 (Deichmannhaus)**
**50667 Köln (DE)**

(56) References cited:
US-A- 3 462 383       US-A- 3 640 909
US-A- 3 748 221       US-A- 3 803 237
US-A- 4 143 188       US-A- 4 145 247
US-A- 4 250 298       US-A- 4 277 581
US-A- 4 319 019       US-A- 5 189 142

**Description**

BACKGROUND OF THE INVENTION

1.0 Field Of The Invention:

The present invention relates to wet strength resin compositions and methods of making the same and particularly to improved wet strength resins which eliminate the generation of 1,3-dichloro-2-propanol, epichlorohydrin and 1-chloro-2,3-propanediol.

2. Description Of Related Art:

Polyamine-epichlorohydrin resins have been used as wet strength resins for paper since the early 1950's. Such resins are cationic and are particularly useful because they are formaldehyde-free and develop wet strength at neutral or alkaline pH values.

One of the drawbacks associated with the use or polyamine-epichlorohydrin resins is the emission of harmful chlorinated compounds into the water systems of pulp and paper mills. These chlorinated compounds, including 1,3 dichloro-2- propanol, epichlorohydrin and 1-chloro-2,3-propanediol, are usually discharged into the effluent waste water systems because they are only partially substantive to cellulose pulp fibers. The permissible amounts of these chlorinated compounds are decreasing and therefore efforts have been made to reduce the amounts of these materials.

Fischer et al, U.S.-A- 5,116, 887; European Patent Publication No. 0 508 203; Devore et al., U.S. -A- 5,189,142 and 5,239,047; and Fischer et al., U.S. Serial No. 08/165,779 filed December 10, 1993 (now US-A-5,492,956) disclose efforts at modifying the conditions under which polyamine-epichlorohydrin resins are prepared to reduce the amount of volatile organic compounds.

It would be of significant advance in the art of making paper to employ wet strength resins which are derived from cross-linking agents other than epichlorohydrin to eliminate the generation of such chlorinated by-products and yet possess excellent wet-strength properties.

US-A-3,748,221 discloses a cationic wet-strength resin composition comprising the reaction product of a polyaminoamide with a stoichiometric amount of a crosslinking agent selected from the group consisting of diglycidyl ethers and methylene-bis-acrylamide.

US-A-4,319,019 describes a cationic wet-strength resin composition comprising the reaction product of a polyamine (B) such a ethylene diamine, diethylene triamine etc. and a polyaminoamide (A) with a crosslinking agent selected from the group consisting of diepoxides (e.g. 1,2,3,4-diepoxybutane, butane-1,4-diglycidyl ether), chloroacetyl chloride and methylene-bis-acrylamide.

3.0 Summary of the Invention

The present invention is directed to wet-strength resins which are cationic and thermosetting, and to methods of producing the same which eliminate the generation of the by-products 1,3-dichloro-2-propanol, epichiorohydrin and 1-chioro-2,3-propanediol.

The present invention relates to a thermosetting cationic wet-strength resin composition comprising in an aqueous polyol solution the reaction product of a polyamine, a polyaminoamide or an alkylated polyaminoamide with maleic anhydride as the crosslinking agent wherein said crosslinking agent is present in said reaction product in an amount sufficient to provide a mole ratio with reactive nitrogen of the amine compound of 0.375 to 3.0.

The wet-strength resin compositions are made by reacting in an aqueous polyol solution a polyamine, a polyaminoamide or an alkylated polyaminoamide with maleic anhydride as the crosslinking agent wherein the mole ratio of said crosslinking agent to reactive nitrogen of said polyamine or polyaminoamide is 0.375 to 3.0.

The resulting wet-strength resins eliminate the generation of the above-mentioned by-products and have excellent wet-strength properties.

DETAILED DESCRIPTION OF THE INVENTION

The present invention is premised on the discovery that wet strength resins using a select cross-linking agent in particular amounts can be produced which eliminate the generation of 1,3-dichloro-2-propanol, epichlorohydrin and 1-chloro-2,3-propanediol. In addition, the resulting resins exhibit good wet strength properties, comparable to those resins made with epichlorohydrin, as determined by measuring the strength of paper sheets made with the resins of the present invention.

The cross-linking agent employed in the present invention is maleic anhydride. This cross-linking agent has been used to cross-link polyamines and polyaminoamides to produce cosmetic compositions for the conditioning of hair as disclosed in Vanlerberghe et al., U.S. -A-4,277,581. The cross-linking agent for hair conditioning is employed in a mole ratio with reactive nitrogen of the amine compound of from 0.025 to 0.35.

Applicants have discovered that resin compositions using said cross-linking agent but in greater mole ratios of 0.375 to 3.0 mole per mole of reactive nitrogen of the amine compound, provide excellent wet-strength properties to paper.

Wet-strength resins of the present invention of the polyamine type are prepared by reacting a polyamine and the cross-linking agent in an aqueous polyol solution.

A polyamine is any amine that has at least two amine functionalities such as a simple diamine (e.g. ethylene diamine) or more than two amine functionalities such as diethylene triamine, triethylene tetramine, tetraethylene pentamine, bis-hexamethylene triamine, polyethyleneimine, polyallylamine, and polydiallylamine, and the like. Preferably, the polyamine is a mixture of polyamines known as amine still bottoms which is a mixture of polyamines containing from 35% to 70% by weight bis-hexamethylenetriamine. It has been found that at least one polyol is a necessary component of the reaction because it performs the dual function of a co-solvent and a moderator of the cross-linking reaction.

The polyol component of the wet strength resin composition can be any aliphatic compound having two or more hydroxyl functionalities that is miscible with water or combinations thereof. Examples of such polyols include ethylene glycol, 1,2-propylene glycol, 1,3-propylene glycol, diethylene glycol, dipropylene glycol, triethylene glycol, 1,6-hexylene glycol, glycerol, monosaccharides such as glucose or fructose, disaccharides such as sucrose, and polyvinyl alcohol. The preferred polyols are 1,2-propylene glycol and dipropylene glycol because they are generally recognized as safe, have flash points >200°C, and are good co-solvents for the polyamine-cross-linking agent reaction.

The process of the present invention is conducted generally by adding the cross-linking agent to a water-polyol-polyamine solution at a rate sufficient to maintain the temperature of the solution in a range of from about 5°C to 25°C to form a reaction mixture having a mole ratio of the cross-linking agent to the reactive nitrogen of the amine compound of 0.375 to 3.0. The temperature of the reaction in accordance with the present invention is no higher than 100°C, preferably in the range of from 15 to 50°C.

Wet strength resins at the present invention may also be prepared by reacting a solution of a polyaminoamide or alkylated derivative thereof with the cross-linking agent. The polyaminoamide is prepared by reacting a diacid such as glutaric acid, adipic acid, mixtures thereof and/or diesters such as dimethyl glutarate, dimethyl adipate and mixtures thereof with one of the amine compounds (e.g. diethyl triamine) mentioned above for preparing the polyamine. The cross-linking agent is added to a polyaminoamide aqueous solution at a rate sufficient to maintain the temperature of the solution from 5°C to 50°C to form a reaction mixture having a mole ratio of the cross-linking agent to the reactive nitrogen of the amine compound of 0.375 to 3.0. The cross-linking reaction is carried out at a temperature of from 15 to 100°C.

EXAMPLE 1

Preparation of a Polyaminoamide Resin

269 g of dibasic acid ester mixture comprised of 65% dimethyl glutarate and 35% dimethyl adipate and 170 g of diethylene triamine was charged to a resin reactor. Stirring and nitrogen sparge were started and the contents of the reactor were heated to 150°C. The temperature was maintained until the start of a methanol reflux. The reflux temperature was allowed to continue until the reaction temperature dropped to 85°C, at which time the methanol was distilled off from the product, allowing the reaction temperature to rise to 150°C during the distillation process which produced 109 g of methanol. A 32.9% solids content polyaminoamide resin solution was made by dissolving the reaction product in 670 g of water. The total alkalinity was 274.8 mg KOH/g dry resin.

EXAMPLE 2

Preparation of an Alkylated Polyaminoamide Resin

297.6 g of the polyaminoamide resin prepared by the method described in Example 1, having a solids content of 50.4% and a total alkalinity of 277.2 mg KOH/g dry resin, and 196.4 g of deionized water were charged to a pressure reactor. Stirring and nitrogen sparge were started and the contents of the reactor were heated to about 80°C. The nitrogen was discontinued and the reactor was pressurized to 0.275MPa (40 psi) with methyl chloride gas. The reaction conditions were maintained until the total alkalinity reached zero. The alkylated polyaminoamide solution was adjusted to a pH of 10 with 37.5 g of a 50% aqueous NaOH solution. The resin solids content was 39.7% and contained 1.77% by weight of tertiary amine based on the total weight of the solution determined by titration.

EXAMPLE 3

Reaction of Polyaminoamide with Maleic Anhydride

140.2 g of dibasic acid ester mixture comprised of 65% dimethyl glutarate and 35% dimethyl adipate and 164.3 g of diethylene triamine were charged to a resin reactor. Stirring and nitrogen sparge were started and the contents of the reactor were heated to 150°C. This temperature was maintained until the start of methanol reflux. The reflux temperature was allowed to continue until the reaction temperature dropped to 85°C, at which time the methanol was distilled off from the product allowing the reaction temperature to rise to 150°C during the distillation which produced 157.4 g of methanol. A 51.3% solids content of polyaminoamide resin solution was made by dissolving the reaction product in 337 g of water. The total alkalinity was determined to be 360 mg KOH/g dry resin. Part of the polyaminoamide solution (87.7g) was transferred to a round bottom reaction flask and 72.0 g of deionized water, 0.1 g of a 50% aqueous solution of NaOH, and 6.1 g of 72.5% actives solution of glycidyl trimethylammonium chloride were added and heated to 85°C for 2 hours, after which, the reactor contents were cooled to 25°C and 12.6 g of maleic anhydride was added. The contents of the reactor were heated to about 70-85°C until the reaction mass gelled and 71.5 g of deionized water was rapidly added. The resulting resin had a pH of 6.4, a Brookfield viscosity of 221 mPa•s (221 cps) (spindle 2, 60 rpm at 25°C), and a solids content of 18.6%.

EXAMPLE 4

Commercial bleached kraft stock of about 3% consistency was diluted to 0.2% with water. Blank handsheets were prepared according to the handsheet preparation method outlined in the Mark IV Dynamic Handsheet Mold/Paper Chemistry Jar Assembly operating manual. Treated handsheets were prepared by the same method except the wet strength resin of the present invention was added as a 0.2% solution at 0.4% resin actives per dry paper while the dispersed stock slurry was mixing at 750 rpm. All handsheets were blotted dry between felt cloths. The wet sheets were dried and cured.

Wet tensile was measured from 2.54 cm x 10.16 cm (1" x 4") strips after soaking in water for one hour and dry tensile was measured from unsoaked similar strips on an Instron Tester. Table 1 shows the increase in wet strength [ (wet tensile/dry tensile) x 100 ] when the composition according to the invention was used to make paper sheets.

The data in Table 1 clearly shows that dry tensiles improve when the composition according to the invention is added to the stock prior to formation of the paper sheet.

## Table 1 [1]

| Sample I.D. | % Dry Strength kPa (psi) | % Increase Dry Tensile (over Blank) |
|---|---|---|
| Example 8 3 | 111.0 (16.1) | 24.8 |
| Fibrabon 33 [2] | 103.4 (15.0) | 16.3 |
| Blank [3] | 88.9 (12.9) | -- |

[1]   Handsheets cured at 70°C for 16 hours at 50% relative humidity.
[2]   Polyaminoamide-Epichlorohydrin Resin (Henkel Corporation).
[3]   No additives.

**Claims**

1.   A thermosetting, cationic wet-strength resin composition comprising in an aqueous polyol solution the reaction product of a polyamine, a polyaminoamide or an alkylated polyaminoamide with maleic anhydride as the crosslinking agent wherein said crosslinking agent is present in said reaction product in an amount sufficient to provide a mole ratio with reactive nitrogen of the amine compound of 0.375 to 3.0.

2. A method of preparing the wet-strength resin composition as defined in claim 1 comprising reacting in an aqueous polyol solution a polyamine, a polyaminoamide or an alkylated polyaminoamide with maleic anhydride as the crosslinking agent wherein the mole ratio of said crosslinking agent to reactive nitrogen of said polyamine or polyaminoamide is 0.375 to 3.0.

3. The method of claim 2 wherein the polyaminoamide is prepared from an amine compound and a mixture of dimethyl glutarate and dimethyl adipate.

4. The method of claim 2 wherein said polyamine is selected from the group consisting of ethylene diamine, diethylene triamine, triethylene tetramine, tetraethylene pentamine, bis-hexamethylene triamine, polyethylenimine, polyallylamine, and polydiallylamine.

5. The method of claim 2 comprising adding said crosslinking agent to a water-polyol-polyamine solution at a rate sufficient to maintain the temperature of the solution in the range of from 5°C to 25°C and reacting the crosslinking agent and the solution at a temperature of no higher than 100°C.

6. The method of claim 2 comprising adding said crosslinking agent to an aqueous solution of a polyaminoamide or alkylated polyaminoamide thereof at a rate sufficient to maintain the temperature of the solution from 5°C to 50°C and reacting the crosslinking agent and solution at a temperature of from 15°C to 100°C.

7. The method of claim 2 wherein the polyaminoamide is prepared by reacting a diacid, a diester or mixture thereof with an amine compound.

8. The method of claim 7 wherein the diacid is selected from the group consisting of glutaric acid, adipic acid and mixtures thereof.

9. The method of claim 7 wherein the diester is selected from the group consisting of dimethyl glutarate, dimethyl adipate and mixtures thereof.


**Patentansprüche**

1. Warmhärtende kationische naßfeste Harzzusammensetzung, die in einer wäßrigen Polyollösung das Reaktionsprodukt eines Polyamins, eines Polyaminoamids oder eines alkylierten Polyaminoamids mit Maleinsäureanhydrid als Vernetzungsmittel umfaßt, wobei das Vernetzungsmittel in dem Reaktionsprodukt in einer ausreichenden Menge vorhanden ist, so daß man ein Stofffmengenverhältnis zu reaktiven Stickstofffatomen der Aminverbindung von 0,375 bis 3,0 erhält.

2. Verfahren zur Herstellung der naßfesten Harzzusammensetzung, wie sie in Anspruch 1 definiert ist, umfassend das Umsetzen eines Polyamins, eines Polyaminoamids oder eines alkylierten Polyaminoamids mit Maleinsäureanhydrid als Vernetzungsmittel in einer wäßrigen Polyollösung, wobei das Stofffmengenverhältnis des Vernetzungsmittels zu reaktiven Stickstoffatomen des Polyamins oder Polyaminoamids 0,375 bis 3,0 beträgt.

3. Verfahren gemäß Anspruch 2, wobei das Polyaminoamid aus einer Aminverbindung und einem Gemisch von Dimethylglutarat und Dimethyladipat hergestellt wird.

4. Verfahren gemäß Anspruch 2, wobei das Polyamin aus der Gruppe ausgewählt ist, die aus Ethylendiamin, Diethylentriamin, Triethylentetramin, Tetraethylenpentamin, Bis-hexamethylentriamin, Polyethylenimin, Polyallylamin und Polydiallylamin besteht.

5. Verfahren gemäß Anspruch 2, umfassend das Hinzufügen des Vernetzungsmittels zu einer Wasser-Polyol-Polyamin-Lösung mit einer ausreichenden Geschwindigkeit, so daß die Temperatur der Lösung im Bereich von 5°C bis 25°C gehalten wird, und Umsetzen des Vernetzungsmittels und der Lösung bei einer Temperatur von nicht mehr als 100°C.

6. Verfahren gemäß Anspruch 2, umfassend das Hinzufügen des Vernetzungsmittels zu einer wäßrigen Lösung eines Polyaminoamids oder alkylierten Polyaminoamids mit einer ausreichenden Geschwindigkeit, so daß die Temperatur der Lösung auf 5°C bis 50°C gehalten wird, und Umsetzen des Vernetzungsmittels und der Lösung bei einer Temperatur von 15°C bis 100°C.

7. Verfahren gemäß Anspruch 2, wobei das Polyaminoamid hergestellt wird, indem man eine Disäure, einen Diester oder ein Gemisch davon mit einer Aminverbindung umsetzt.

8. Verfahren gemäß Anspruch 7, wobei die Disäure aus der Gruppe ausgewählt ist, die aus Glutarsäure, Adipinsäure und Gemischen davon besteht.

9. Verfahren gemäß Anspruch 7, wobei der Diester aus der Gruppe ausgewählt ist, die aus Dimethylglutarat, Dimethyladipat und Gemischen davon besteht.

**Revendications**

1. Composition de résine cationique résistante à l'état humide thermodurcissable comprenant dans une solution de polyol aqueuse le produit de réaction d'une polyamine d'un polyaminoamide ou d'un polyamide alkylé avec de l'anhydride maléique comme agent de réticulation, l'agent de réticulation étant présent dans le produit réactionnel dans une quantité suffisante pour fournir un rapport molaire avec l'azote réactif du composé amine de 0,375 à 3,0.

2. Procédé pour la préparation d'une composition de résine résistante à l'état humide telle que définie dans la revendication 1, comprenant la mise en réaction dans une solution de polyol aqueuse d'une polyamine d'un polyaminoamide ou d'un polyaminoamide alkylé avec l'anhydride maléique comme agent de réticulation, procédé dans lequel le rapport molaire entre l'agent de réticulation et l'azote réactif de la polyamine ou polyaminoamide est de 0,375 à 3,0.

3. Procédé selon la revendication 2, dans lequel le polyaminoamide est préparé à partir d'un composé amine et d'un mélange de glutarate de diméthyle et d'adipate de diméthyle.

4. Procédé selon la revendication 2, dans lequel la polyamine est choisie dans le groupe constitué par l'éthylène diamine, la diéthylène triamine, la triéthylènetétramine, la tétraéthylène pentamine, la bis-hexaméthylène triamine, la polyéthylènimine, la polyallylamine, et la polydiallylamine.

5. Procédé selon la revendication 2, comprenant l'addition de l'agent de réticulation à une solution eaupolyol-polyamine à un débit suffisant pour maintenir la température de la solution dans la plage allant de 5°C jusqu'à 25°C et mise en réaction de l'agent de réticulation et de la solution à une température ne dépassant pas 100°C.

6. Procédé selon la revendication 2, comprenant l'addition de l'agent de réticulation à une solution aqueuse d'un polyaminoamide ou de son polyaminoamide alkylé à un débit suffisant pour maintenir la température de la solution de 5°C jusqu'à 50°C et mise en réaction de l'agent de réticulation et de la solution à une température allant de 15°C jusqu'à 100°C.

7. Procédé selon la revendication 2, dans lequel le polyaminoamide est préparé par mise en réaction d'un diacide, d'un diester ou de leur mélange avec un composé amine.

8. Procédé selon la revendication 7, dans lequel le diacide est choisi dans le groupe constitué par l'acide glutarique, l'acide adipique et leurs mélanges.

9. Procédé selon la revendication 7, dans lequel le diester est choisi dans le groupe constitué par le glutarate de diméthyle, l'adipate de diméthyle et leurs mélanges.